# EUROPEAN PATENT APPLICATION

(11) **EP 2 111 009 A1**
(43) Date of publication of application: **21.10.2009**
(21) Application number: 07011167.9
(22) Date of filing: 06.06.2007
(51) Int. Cl.: H04L 29/06

(54) **Routing of a mobile network node in a nested moving network**

(71) Applicant: Nokia Siemens Networks Oy, 02610 Espoo (FI)
(72) Inventor: Görg, Carmelita Prof., 28357 Bremen (DE); Pangboonyanon, Varaporn, 28213 Bremen (DE); Pittmann, Frank, 12099 Berlin (DE); Udugama, Asanga, 28357 Bremen (DE)
(74) Representative: Schober, Ralf Stefan

(57) **Abstract**

A route improvement method for selecting a route that extends between a nested-mobile network node and a correspondence node. The method comprises the step of swapping, by a root mobile router, a content of source or destination address field for content of Routing Header.

## Description

This invention relates to an improved route in a nested moving network.

In a Mobile Internet Protocol environment such as Mobile Internet Protocol version 6 (MIPv6), a mobile node can be reached at its home address when the mobile node is attached to its home network, and when the mobile network is attached to a foreign network. A care of address enables the mobile node to be reachable when the mobile node is connected to the foreign network. The care of address is associated with the home address by a router - known as Home Agent - on the home network. The association of addresses is known as binding.

US 2006/ 0098575 Al discloses a route selection method. The method comprises transmitting messages to test communications between a mobile node and a correspondent node.

US 2005/ 0232286 Al discloses a route optimisation method for transmission of packets between particular nodes in a mobile network.

US 2003/ 0095523 Al discloses a solution for mobile network that combines features of multicast and mobile Internet protocol.

A Network Mobility (NEMO) Basic support protocol is shown in V. Devarapalli, R. Wakikawa, A. Petrescu, and P. Thubert, "Network Mobility (NEMO) Basic Support Protocol", RFC 3963, IETF January 2005, http://wwww.ietf.org/rfc/rfc3969.txt. The protocol enables mobile networks to attach to different points in the Internet.

A version of the Internet Protocol is disclosed in S. Deering and R. Hinden, "Internet Protocol, Version 6 (IPV6) Specification," RFC 2460, December, 1998, http://www.ietf.org/rfc/rfc2460.txt.

A Network Mobility (NEMO) basic support that enables Mobile Network is disclosed in P. Thubert and M. Molteni, "IPv6 Reverse Routing Header and its application to Mobile Networks," drafting-thubert-nemo-reverse-routing-header-05, June 2004, http://wwwl.tools.ietf.org/html/draft-thubert-nemo-reverse-routing-header-05.

It is an object to provide an improved route for a mobile node in a nested mobile network. This object is achieved by the subject matter of the independent claim. Further improvements are achieved by the subject matter of the dependent claims.

A method according to the invention selects an improved route that extends between a nested mobile network node (MNN) of a nested moving network and a correspondence node (CN). The nested moving network comprises the nested MNN, a mobile router (MR), and a root mobile router (root_MR). The nested MNN is connected to the MR and the MR is connected to the root_MR. The improved route does not extend to the home agent. In practice, the improved route conserves network resources and enlarges the capacity of data that the network can handle. These desirable qualities generally translate to lower cost and higher efficiency for the end-user.

The method comprises a step of swapping by the root_MR. The root_MR swaps a content of a destination address of a header of an incoming packet for a content of an incoming field of the header of the incoming packet. The incoming packet is destined for transmission from the CN to the nested MNN.

The root_MR swaps a content of a source address of a header of an outgoing packet for a content of a second outgoing field of the header of the outgoing packet. The root_MR also swaps a content of a destination address of the header of the outgoing packet for a content of a first outgoing field of the header of the outgoing packet. The outgoing packet is destined for transmission from the nested MNN to the CN.

The act of swapping is a relatively simple task, which an advantage in that its implementation is generally easy and requires low cost.

The incoming field can be in a form of a type 2 Routing Header (RH2). The first outgoing field may be in a form of a type 0 Routing Header (RH0) whilst the second outgoing field can be in a form of a type 5 Routing Header (RH5). The RHO, RH2 and RH5 are defined in Mobile Internet v6 Protocol (MIPv6). The use of RHO, RH2 and RH5 in data packets provides for a fixed header length that is not dependent on the number of tunnels that the data packets are passing through. This is an advantage in that the fixed header length provides for easy processing of the data packets.

The additional functionalities of network elements, such as the root_MR and the nested MR, are shown in an example of the invention. The example also shows additional steps of the method. The additional functionalities and additional steps are generally simple and easy to implement.

In the example, the method comprises the steps of care of address assignment, of return-routability control message transmission (RRCMT), of binding update control message transmission (BUCMT), and of incoming and outgoing data transmission (IODT).

A care of address (CoA) is provided to the mobile router (MR) in step of the care of address assignment. The step comprises broadcasting of a router advertisement (RA) message by the root_MR. A flag is provided in the RA message for informing RA recipients that the address of root_MR can be used as a care of address. Thereafter, the nested MNN uses current egress address of the root_MR as its care of address.

The CN receives assurance that the nested MNN is addressable at its claimed CoA by the step of the RRCMT. The step of the RRCMT comprises the steps of Home Test Init Message (HoTI), of Care of Address Init Message (CoTI), of Home Test Message (HoT), and of Care of Address Test Message (CoT).

The nested MNN, according to example of the invention, initiates the step of HoTI after the nested MNN is notified of the route advertisement (RA) by the root_MR. This initiation provides the advantage of automatic commencement of the HoTI, which otherwise may need to be started manually.

The nested MNN provides a home address of the nested MNN in a source address of an HoTI packet, a care of address of the root_MR in a destination address of the HoTI packet. The nested MNN also places an address of home agent of the root_MR in a RH0 of the HoTI packet, and a care of address of the root_MR in a RH5 of the HoTI packet.

A means for the nested MNN to request a keygen token from the CN is provded by the COTI. The keygen is defined in the MIPv6. The step of CoTI comprises the step of providing, by the nested MNN, a home address of the nested MNN in a source address of an CoTI packet, a care of address of the root_MR in a destination address of the CoTI packet. The nested MNN also provides the address of the CN in a RH0 of the CoTI packet, and the care of address of the root_MR in a RH5 of the CoTI packet.

A response to the step of the HoTI is provided by the step of the HoT. The step of HoT comprises the step of providing, by the home agent of the root_MR, a care of the address of the root_MR in a destination address of a HoT packet and a home address of the nested MNN in a RH2 of the HoT packet.

The step of the CoTI provides a response to the step of COT. The step of CoT comprises the step of providing, by the CN, a care of the address of the root_MR in a destination address of an CoT packet and a home address of the nested MNN in a RH2 of the CoT packet.

A binding update is provided from the nested MNN to the CN or MNN23_HA in the step of binding-update control message transmission (BUCMT). The binding update is defined in the MIPv6. The step of BUCMT comprises the step of binding update (BU) and of binding acknowledgement (BA).

The step of BU comprises the provision, by the nested MNN, of a home address of the nested MNN in a source address of an BU packet, a care of address of the root_MR in a destination address of the BU packet. The nested MNN also provides the address of the CN or the address of home agent of the root_MR in a RH0 of the BU packet, and a care of address of the root_MR in a RH5 of the BU packet.

In accordance to the example of the invention, the CN provides the care of address of the root_MR in a destination address of a BA packet and a home address of the nested MNN in a RH2 of the BA packet, in the step of BA.

The step of incoming and outgoing data transmissions (IODT) provides transmission of data between the nested MNN and the CN. The step of IODT comprises the step of incoming data transmission (IDT) and the step of outgoing data transmission (ODT).

The CN provides a care of address of the root_MR in a destination address of an incoming data packet and a home address of the nested MNN in a RH2 of the incoming data packet, in the step of IDT.

The step of ODT comprises the step of providing, by the nested MNN, a home address of the nested MNN in a source address of an outgoing data packet, a care of address of the root_MR in a destination address of the outgoing data packet. The nested MNN also provides the address of the CN in a RH0 of the outgoing data packet, and a care of address of the root_MR in a RH5 of the outgoing data packet.

The step of IODT benefits from the advantage of the improved route in that data packets are travelling in the improved route.

A method for operating a root mobile router (root_MR) (40) comprises the step of receiving an incoming packet. The incoming packet may be sent from a correspondence node (CN) (30). The root_MR swaps the contents of headers of the incoming packet and then forwards the swapped incoming packet to a nested mobile network node (MNN) (46). The root_MR (40) receives an outgoing packet from the nested MNN (46). The root_MR then swaps the contents of headers of the outgoing packet and afterward forwards the swapped outgoing packet to its destination.

The root_MR (40) comprises an input means for receiving an incoming or outgoing packet, a forwarding means for transmit the incoming or the outgoing packet, an incoming swapping means, and an outgoing swapping means. The incoming swapping means is connected to the input means and the forwarding means whilst the outgoing swapping means is connected to the input means and the forwarding means. The root_MR also includes a broadcasting means for sending a router advertisement (RA) message. The broadcasting means is connected to the forwarding means.

The nested MNN (46) comprises an input means for receiving an incoming packet, a forwarding means for transmitting an outgoing packet, and a providing means that is connected to the forwarding means.

The home agent (32) of a nested mobile network node (MNN) (46) and the correspondence node (CN) (30) comprises parts that are similar to the parts of the MNN (46).
- FIG. 1: illustrates a schematic diagram of an improved route in a nested moving network;
- FIG. 2: illustrates a flow chart of steps of determining the improved route of FIG. 1;
- FIG. 3: illustrates a sequence diagram of data packets of the steps of FIG. 2;
- FIG. 4: illustrates a detail sequence diagram of the data packet of a Home Test Init Message of the step of FIG. 3;
- FIG. 5: illustrates a detail sequence diagram of the data packet of a Care of Address Init Message of the step of FIG. 3;
- FIG. 6: illustrates a detail sequence diagram of the data packet of a Home Test Message of the step of FIG. 3;
- FIG. 7: illustrates a detail sequence diagram of the data packet of a Care of Address Test Message of the step of FIG. 3;
- FIG. 8: illustrates a detail sequence diagram of the data packet of a binding update of the step of FIG. 3;
- FIG. 9: illustrates a detail sequence diagram of the data packet of a binding acknowledgement of the step of FIG. 3;
- FIG. 10: illustrates a detail sequence diagram of the data packet of an Incoming Data Transmission of the step of FIG. 3; and
- FIG. 11: illustrates a detail sequence diagram of the data packet of an Outgoing Data Transmission of the step of FIG. 3.

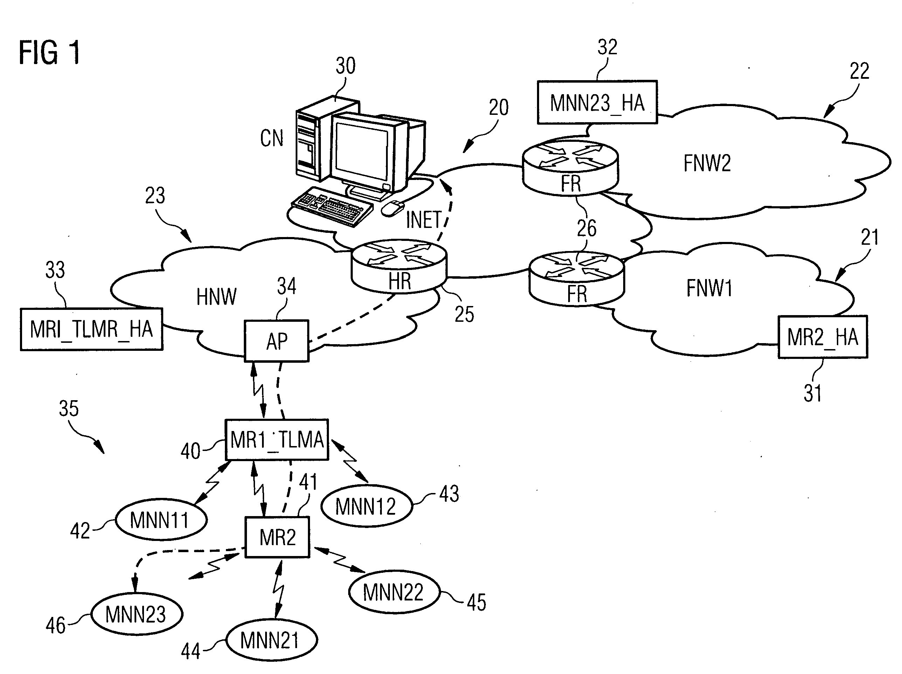

The FIGS. 1 to 10 illustrates an embodiment operating in a mobile Internet Protocol version 6 (MIPv6).

FIG. 1 illustrates a schematic diagram of an improved route 50 in a nested moving network 35. The FIG. 1 includes an Internet (INET) 20, foreign networks (FNW1) 21 and (FNW2) 22, home network (HNW) 23, host router (HR) 25, foreign routers (FR) 26, and an improved route 50. The Internet (INET) 20 is connected to the home network (HNW) 23 via the host router (HR) 25 whilst the foreign networks (FNW1) 21 and (FNW2) 22 are connected to the Internet (INET) 20 by the foreign routers (FR) 26 respectively. The improved route 50 extends from the home network (HWN) to the Internet (INET) 20.

The INET 20 includes a correspondence node (CN) 30. The FNW1 21 and the FNW2 22 comprises a home agent (MR2_HA) 31 of a mobile router (MR2) 41 and a home agent (MNN23_HA) 32 of a mobile network node (MNN23) 46.

The home network (HNW) 23 includes a home agent (MR1_HA) 33 of a mobile router (MR1) 40 and an access point (AP) 34. The home agent (MR1_TLMR_HA) 33 is also known as home agent (MR1_HA) 33. The access point (AP) 34 is connected to a nested moving network (NEMO) 35, which includes mobile routers 40 and 41. The mobile router 40 is connected to the mobile router 41 and the access point (AP) 34.

The mobile router (MR1) 40 is also known as the top-level mobile router (MR1_TLMR) 40. The top-level mobile router (MR1_TLMR) 40 is connected to the access point (AP) 34 and to mobile network nodes (MNN11) 42 and (MNN12) 43. The mobile router (MR2) 41 is connected to mobile network nodes (MNN21) 44, (MNN22) 45 and (MNN23) 46.

The improved route 50 extends from the mobile network node (MNN23) 46 to the correspondence node (CN) 30. The improved route 50 extends from the mobile network node (MNN23) 46 to the mobile router (MR2) 41, from the mobile router (MR2) 41 to the top-level mobile router (MR1_TLMR) 40, and from the top-level mobile router (MR1_TLMR) 40 to the access point (AP) 34. Then, the improved route 50 extends from the access point (AP) 34 to the host router (HR) 25, and from the host router (HR) 25 to the correspondence node (CN) 30.

A method to determine the improved route 50 uses a type 2 Routing Header (RH2) for incoming data packets, and a type 0 Routing Header (RH0) and a type 5 Routing Header (RH5) for outgoing data packets. The RH5 modifies a type 4 routing header. The functionality of the MNN23 46 and the MR1_TLMR 40 together with the use of the RHO, the RH5 and the RH2, are illustrated in the FIGS. 1 to 10.

A description of the type 2 Routing Header (RH2) is shown in V. Devarapalli, R. Wakikawa, A. Petrescu, and P. Thubert, "Network Mobility (NEMO) Basic Support Protocol", RFC 3963, IETF January 2005, http://wwww.ietf.org/rfc/rfc3969.txt.

A description of the type 0 Routing Header (RH0) is disclosed in S. Deering and R. Hinden, "Internet Protocol, Version 6 (IPV6) Specification," RFC 2460, December, 1998, http://www.ietf.org/rfc/ rfc2460.txt.

A description of the type 5 Routing Header (RH5) is a modification of a type 4 Routing Header (RH4), which is disclosed in P. Thubert and M. Molteni, "IPv6 Reverse Routing Header and its application to Mobile Networks," drafting-thubert-nemo-reverse-routing-header-05, June 2004, http://wwwl.tools.ietf.org/html/draft-thubert-nemo-reverse-routing-header-05.

The descriptions of the RH2, RH0, and RH5 are therefore included here by way of reference, where appropriate.

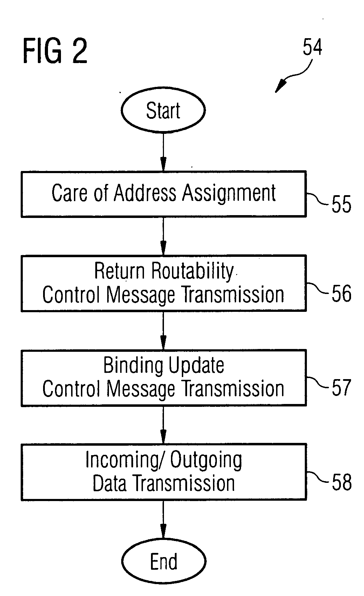

The method comprises steps, as illustrated in a flow chart 54 in FIG. 2. The method comprises a step 55 of care of address assignment, a step 56 of return-routability control message transmission (RRCMT), a step 57 of binding-update control message transmission (BUCMT), and a step 58 of incoming and outgoing data transmissions (IODT). The step 56 is provided after the step 55. The step 57 is placed after the step 56 whilst the step 58 is provided after the step 57.

In the step of the care of address assignment, the MNN23 46 configures its CoA from a Router Advertisement (RA). The MR1_TLMR 40 broadcasts the RA messages with an R flag to indicate that it is advertising the MR1_TLMR 40 address and a T flag to inform the RA recipients, such as the MNN23 46, that the address of the MR1_TLMR 40 can be used as the CoA. The MNN23 46 then uses the current egress Internet Protocol (IP) address of the MR1_TLMR 40 as its CoA.

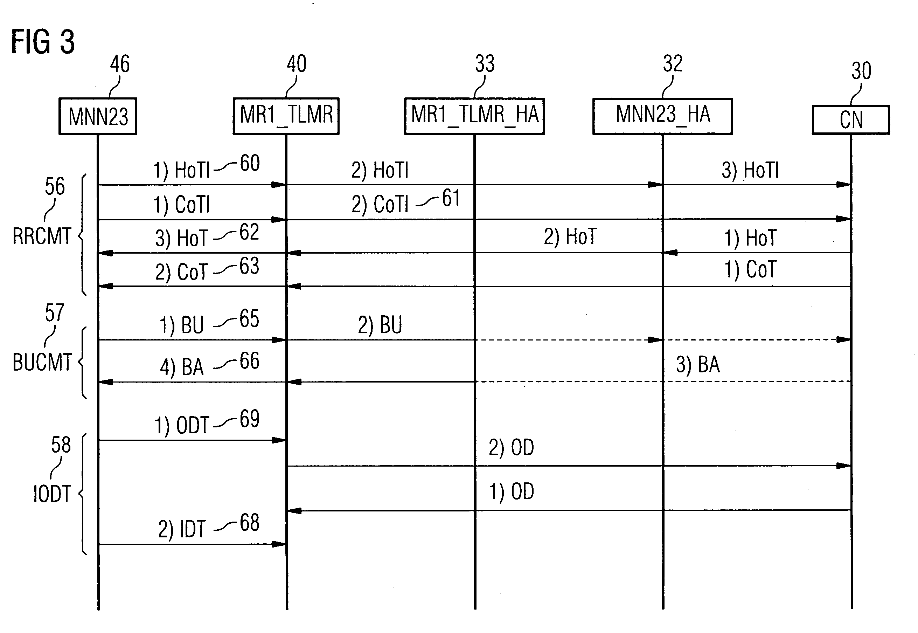

The return-routability control message transmission (RRCMT) comprises a step 60 of home test init test (HoTI), a step 61 of care of address init test (CoTI), a step 62 of home test message (HoT), and a step 63 of care of address test message (CoT), as illustrated in FIG. 3.

The step 60 of HoTI is initiated by the MMN23 46. The MNN23 46 knows that it is in a nested NEMO 35 from the T flag in the RA message and initiates the step 60 by sending a data packet to the MR1_TLMR 40. The MR1_TLMR 40 then sends the data packet to the MNN23_HA 32 and the MNN23_HA 32 afterward sends the data packet to the CN 30, as illustrated in FIGS. 3.

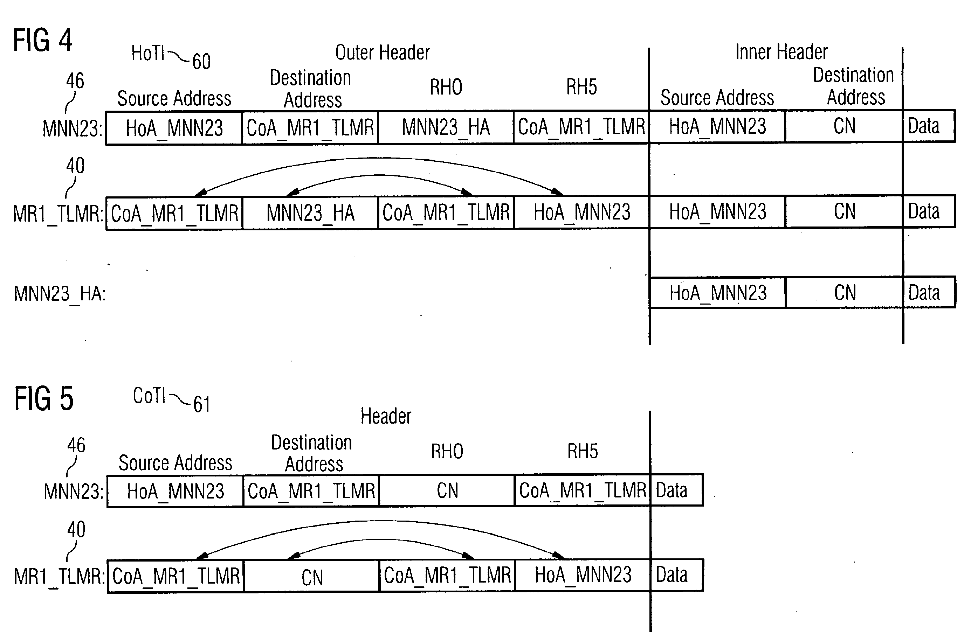

The MNN23 46 provides a data packet comprising an inner header, an outer header, and a data field. The outer header encapsulates the inner header, which is also known as tunnelling. The inner header includes a source address field and a destination address field whilst the outer header includes a source address field, a destination address field, the RHO, and the RH5, as illustrated in the FIG. 4.

The source address field of the inner header includes address of the CN 30 whilst the destination address field of the inner header includes home address of the MNN23 46 (HoA_MNN23). The source address field of the outer header includes home address of the MNN23 46 (HoA_MNN23) whilst the destination address field of the outer header includes a care of address of the MR1_TLMR 40 (CoA_MR1_TLMR). The RH0 of the outer header includes an address of home agent of the MNN23 (MNN23_HA) 32 whilst the RH5 of the outer header includes a care of address of the MR1_TLMR 40 (CoA_MR1_TLMR). The data field of the inner header comprises data. The MNN23 then sends the data packet to the MR1_TLMR 40, as destined by the address in the destination address field of the outer header.

The MR1_TLMR 40 then swaps the content of the source address field of the outer header for the content of the RH5 and swaps the content of the destination address field of the outer header for the content of the RH0, as illustrated in the FIG. 4. The MR1_TLMR 40 then sends the data packet to the MNN23_HA 32, as destined by the address in the destination address field of the outer header.

The MNN23_HA 32 afterward removes the outer header of the data packet from the data packet, as illustrated in the FIG. 4. The removal of the outer header is also known as de-capsulation or de-tunnelling. The MNN23_HA 32 then sends the data packet to the CN, as destined by the address in the destination address field of the inner header.

In the step 61 of CoTI, a data packet is sent from the MNN23 46 to the MR1_TLMR 40, from the MR1_TLMR 40 to the CN 30, as illustrated in the FIG. 3.

The MNN23 46 provides a data packet of CoTI that includes a header and a data field. The header includes a source address field, a destination address field, a RH0 field, and a RH5 field, as illustrated in the FIG. 5. The source address field of the header includes the HoA_MNN23 whilst the destination address field of the header includes the CoA_MR1_TLMR. The RH0 of the header includes the address of the CN 30 whilst the RH5 of the header includes the CoA_MR1_TLMR. The data field of the inner header comprises data. The NMM23 46 then sends the data packet to the MR1_TLMR 40, as destined by the address in the destination address field of the header.

The MR1_TLMR 40 afterward swaps the content of the source address field of the header for the content of the RH5 field and swaps the content of the destination address field of the header for the content of the RH0 field. The MR1_TLMR 40 then sends the data packet to the CN 30, as destined by the address in the destination address field of the header.

In the step 62 of HoT, a data packet is sent from the CN 30 to the MNN23_HA 32, from the MNN23_HA 32 to the MR1_TLMR 40, and from MR1_TLMR 40 to the MNN23 46, as illustrated in the FIG. 3.

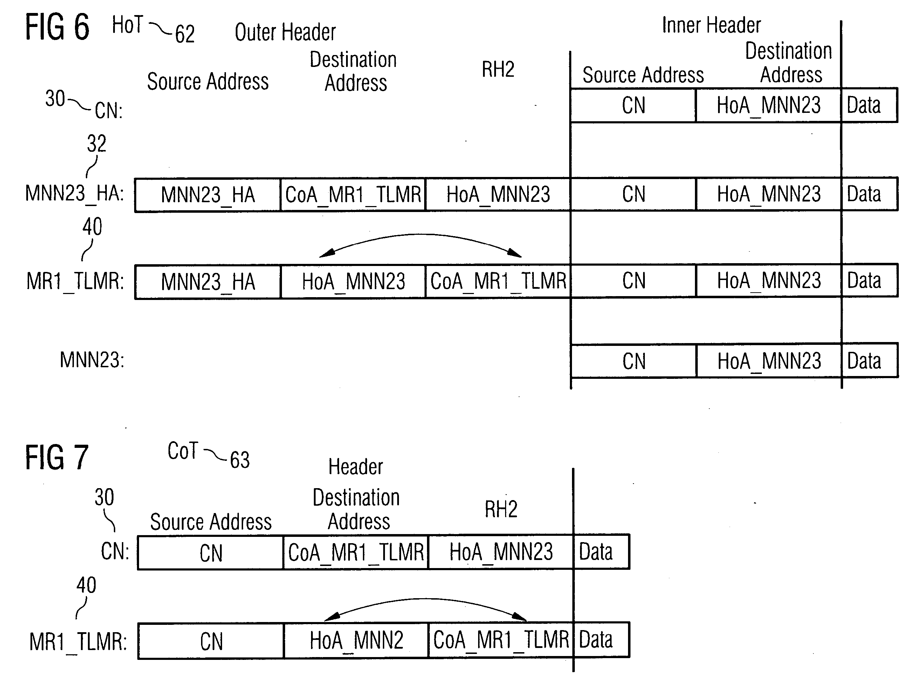

The CN 30 provides a data packet of the HoT that comprises an inner header and a data field. The inner header of the HoT includes a source address field and a destination address field, as illustrated in the FIG. 6. The source address field of the inner header includes the address of CN 30 whilst the destination address field of the inner header includes the HoA_MNN23. The data field comprises data. The CN 30 then sends the data packet to the MNN23_HA 32, as destined by address in the destination address field of the inner header of the data packet.

The MNN23_HA 32 then provides an outer header to the data packet. The outer header comprises a source address field, a destination address field, and a RH2 field, as illustrated in the FIG. 6. The source address field of the outer header includes the address of the MNN23_HA 32 and the destination address field of the outer header includes the CoA_MR1_TLMR. The RH2 comprises the HoA_MNN23. The MNN23_HA 32 afterward sends the data packet to the MR1_TLMR 40, as destined by the address in the destination address field of the outer header of the data packet.

The MR1_TLMR 40 then swaps the content of the destination field of the outer header for the content of the RH2 field, as illustrated in the FIG. 6. The MR1_TLMR 40 then sends the data packet to the MNN23 46, as destined by the address in the destination address field of the outer header of the data packet.

The MNN23 46 afterward removes the outer header of the data packet, as illustrated in the FIG. 6.

In the step 63 of CoT, a data packet is sent from the CN 30 to the MR1_TLMR 40, and from MR1_TLMR 40 to the MNN23 46, as illustrated in the FIG. 3

The CN 30 provides a data packet of the CoT that comprises a header and a data field. The header of the CoT includes a source address field, a destination address field and the RH2, as illustrated in the FIG. 7. The source address field comprises the address of CN 30. The destination address field comprises the CoA_MR1_TLMR. The RH2 comprises the HoA_MNN23. The data field comprises data. The CN 30 then sends the data packet to the MR1_TLRM 40, as destined by the address in the destination address field of the header.

The MR1_TLMR 40 then swaps the content of the destination field for the content of the RH2 field, as illustrated in the FIG. 7. The MR1_TLMR 40 afterward sends the data packet to the MNN23 46, as destined by the address in the destination address field of the header. This is illustrated in FIG. 3.

The step 57 of the binding-update control message transmission (BUCMT) includes a step 65 of binding update (BU) and a step 66 of binding acknowledgment (BA), as illustrated in FIG. 3.

In the step 65 of BU, the data packet is sent from the MNN23 46 to the MR1_TLMR 40, from the MR1_TLMR 40 to the MNN23_HA 32 or to the CN 30, as illustrated in the FIG. 3.

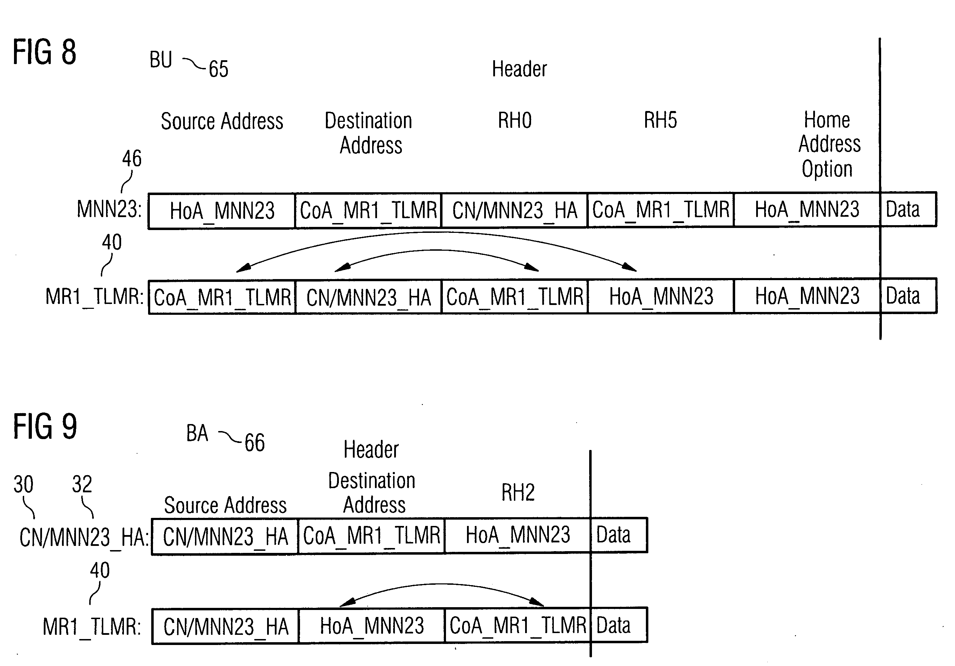

The MNN23 46 provides a data packet of the BU that comprises a header and a data field. The header of the BU includes a source address field, a destination address field, a RH2 field, a RH5 field, and a home-address option field, as illustrated in the FIG. 8. The source address field comprises the HoA_MNN23. The destination address field comprises the CoA_MR1_TLMR. The RH0 field comprises the address of the CN 30 or MNN23_HA 32. The RH5 field comprises the CoA_MR1_TLMR. The home-address option field comprises the HoA_MNN23. The data field comprises data. The MNN23 46 then sends the data packet to the MR1_TLMR 40, as illustrated in the FIG. 8.

The MR1_TLMR 40 then swaps the content of the source address field for the content of the RH5 field and swaps the content of the destination field for the content of the RHO, as illustrated in the FIG. 8. Moreover, the MR1_TLMR 40 maintains a binding list of the mobile nodes that are connected to the MR1_TLMR 40, such as MNN23 46. The MR1_TLMR 40 afterward sends the data packet to the CN 30 or MNN23_HA 32, as destined by the address in the destination address field.

In the step 66 of BA, the data packet is sent from the CN 30 to the MR1_TLMR 40 or from the MNN23_HA 32 to the MR1_TLMR 40, and from the MR1_TLMR 40 to the MNN23 46, as illustrated in the FIG. 3.

The CN 30 or MNN23_HA 32 provides a data packet of the BA comprising a header and a data field. The header of the BA includes a source address field, a destination address field, and a RH0 field, as illustrated in the FIG. 9. The source address field comprises the address of CN 30 or MNN23_HA 32. The destination address field comprises the CoA_MR1_TLMR. The RH0 field comprises the address of the HoA_MNN23. The data field comprises data. The CN 30 or MNN23_HA 32 sends the data packet to the MR1_TLMR 40, as destined by the address in the destination address field.

The MR1_TLMR 40 afterward swaps the content of the destination field for the content of the RHO, as illustrated in the FIG. 9. The MR1_TLMR 40 then sends the data packet to the MNN23 46, as destined by the address in the destination address field.

The step 58 of incoming and outgoing data transmissions (IODT) comprises a step 68 of incoming data transmission (IDT) and a step 69 of outgoing data transmission (ODT), as illustrated in FIG. 3.

In the step 68 of IDT, a data packet is sent from the CN 30 to MR1_TLMR 40 and from the MR1_TLMR 40 to the MNN23 46, as illustrated in the FIG. 3.

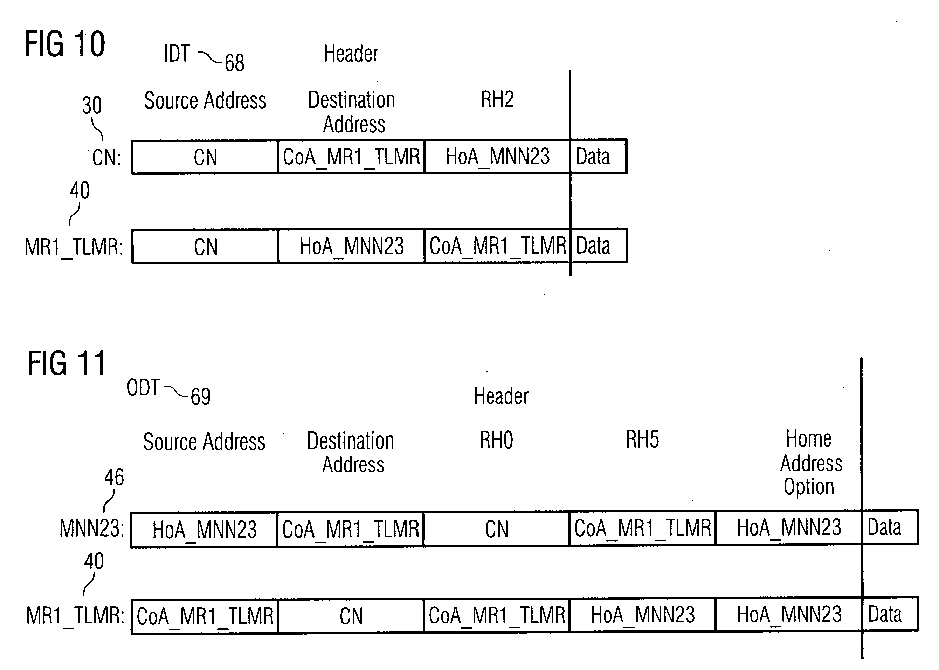

The CN 30 provides a data packet of the IDT, which comprises a header and a data field. The header of the IDT includes a source address field, a destination address field, and a RH2 field, as illustrated in the FIG. 10. The source address field comprises the address of CN 30. The destination address field comprises the CoA_MR1_TLMR. The RH2 field comprises the address of the HoA_MNN23. The data field comprises data. The CN 30 then sends the data packet to the MR1_TLMR 40, as destined by the address in the destination field of the header.

The MR1_TLMR 40 then swaps the content of the destination field for the content of the RH2, as illustrated in FIG. 10. The MR1_TLMR 40 afterward sends the data packet to the MNN23 46, as destined by the address in the destination address of the header.

In the step 69 of ODT, a data packet is sent from. the MNN23 46 to the MR1_TLMR 40 and from the MR1_TLMR 40 to the CN 30, as illustrated in FIG. 3.

The MNN23 46 provides a data packet of the IDT that includes a header and a data field. The header of the BA includes a source address field, a destination address field, a RH0 field, a RH5 field and a home-address option field, as illustrated in the FIG. 11. The source address field comprises the HoA_MNN23. The destination address field comprises the CoA_MR1_TLMR. The RH0 field comprises the address of the CN 30. The RH5 field comprises the CoA_MR1_TLMR. The home-address option field comprises the HoA_MNN23. The data field comprises data. The MNN23 46, then send the data packet to the MR1_TLMR 40.

The MR1_TLMR 40 then swaps the content of the source field for the content of the RH5 and swaps the content of the destination field for the content of the RHO, as illustrated in the FIG. 11. The MR1_TLMR 40 afterward sends the data packet to the CN 30.

In a generic sense, the mobile node (MNN23) 46 is a type of Mobile Internet Protocol version (MIPv6) visiting mobile node. The packet can be in a form an incoming packet or outgoing packet. Moreover, the packet can be in the form of an HoTI packet, an CoTI package, a HoT package, CoT package, BU package, or BA package. A header can be in the form of an outer header or inner header.

The mobile node (MNN23) 46 as provided here is a form of nested mobile network node. The top-level mobile router (MR1_TLMR) 40 as provided here is a form a root mobile router. The type 2 Routing Header as provided here is a form of an incoming field. The type 0 Routing Header as provided here is a form of a first outgoing field. The type 5 Routing Header as provided here is a form of a second outgoing field. The address of the top-level mobile router (MR1_TLMR) 40 as provided here is a form of egress address for the mobile node (MNN23) 46.

### Reference numbers

- 20: Internet (INET)
- 21: foreign network (FNW1)
- 22: foreign network (FNW2)
- 23: home network (HNW)
- 25: host router (HR)
- 26: foreign router (FR)
- 30: correspondence node (CN)
- 31: home agent (MR2_HA)
- 32: home agent (MNN23_HA)
- 33: home agent (MR1_HA)
- 34: access point (AP)
- 35: nested mobile network (NEMO)
- 40: top-level mobile route (MR1_TLMR)
- 41: mobile router (MR2)
- 42: mobile node (MNN11)
- 43: mobile node (MNN12)
- 44: mobile node (MNN21)
- 45: mobile node (MNN22)
- 46: mobile node (MNN23)
- 50: improved route
- 54: flow chart
- 55-69: step

## Claims

1. A routing method for selecting a route that extends between a nested mobile network node (MNN) (46) of a nested moving network (35) and a correspondence node (CN) (30), the nested moving network (35) comprises the nested MNNs (44, 45, 46), a plurality of mobile routers (MR) (41), and a root mobile router (root_MR) (40), the nested MNNs (44, 45, 46) being connected to the MR (41) and the MR (41) being connected to the root_MR (40), the method comprising the steps of:
swapping, by the root_MR (40), a content of a destination address of a header of an incoming packet for a content of an incoming field of the header of the incoming packet, the incoming packet being destined for transmission from the CN (30) to the nested MNN (46); and
swapping, by the root_MR (40), a content of a source address of a header of an outgoing packet for a content of a second outgoing field of the header of the outgoing packet, and a content of a destination address of the header of the outgoing packet for a content of a first outgoing field of the header of the outgoing packet, the outgoing packet being destined for transmission from the nested MNN (46) to the CN (30).

2. The method according to claim 1,
**characterised in that**
the incoming field is in a form of a type 2 Routing Header, the first outgoing field is in a form of a type 0 Routing Header, and the second outgoing field is in a form of a type 5 Routing Header.

3. The method according to one of the preceding claims,
**characterised in that**
the routing comprises the steps of care of address assignment, of return routability control message transmission (RRCMT) (56), of binding update control message transmission (BUCMT)(57), and of incoming and outgoing data transmission (IODT) (58).

4. The method according to claim 3,
**characterised in that**
the step of care of address assignment comprises the step of broadcasting, by the root_MR (40), a router advertisement (RA) message, the RA message comprises a flag that informs RA recipients that the address of root_MR (40) can be used as a care of address.

5. The method according to claim 3 or 4,
**characterised in that**
the nested MNN (46) uses current egress address of the root_MR (40) as its care of address.

6. The method according to one of the claims 3 to 5,
**characterised in that**
the step of RRCMT (56) comprises the step of Home Test Init Message (HoTI) (60),
the step of HoTI (60) comprises the further step of providing, by the nested MNN (46), a home address of the nested MNN (46) in a source address of an HoTI packet, a care of address of the root_MR (40) in a destination address of the HoTI packet, an address of home agent (32) of the nested MNN (46) in a RH0 of the HoTI packet, and a care of address of the root_MR (40) in a RH5 of the HoTI packet.

7. The method according to one of the claims 3 to 6,
**characterised in that**
the nested MNN (46) initiates the step of HoTI (60),

8. The method according to one of claims 3 to 7,
**characterised in that**
the step of RRCMT (56) comprises the step of Care of Address Init Message (CoTI) (61),
the step of CoTI (61) comprises the further step of providing, by the nested MNN (46), a home address of the nested MNN (46) in a source address of an CoTI packet, a care of address of the root_MR (40) in a destination address of the CoTI packet, the address of the CN (30) in a RH0 of the CoTI packet, and the care of address of the root_MR (40) in a RH5 of the CoTI packet.

9. The method according to one of claims 3 to 8,
**characterised in that**
the step of RRCMT (56) comprises the step of Home Test Message (HoT) (62),
the step of HoT (62) comprises the further step of providing, by the address of the home agent (32) of the nested MNN (46), a care of the address of the root_MR (40) in a destination address of a HoT packet and a home address of the nested MNN (46) in a RH2 of the HoT packet.

10. The method according to one of claims 3 to 9,
**characterised in that**
the step of RRCMT (56) comprises the step of Care of Address Test Message (CoT) (63),
the step of CoT (63) comprises the further step of providing, by the CN (30), a care of the address of the root_MR (40) in a destination address of an CoT packet and a home address of the nested MNN (46) in a RH2 of the CoT packet.

11. The method according to one of claims 3 to 10,
**characterised in that**
the step of BUCMT (57) comprises the step of binding update (BU) (65),
the step of BU (65) comprises the further step of providing, by the nested MNN (46), a home address of the nested MNN (46) in a source address of an BU packet, a care of address of the root_MR (40) in a destination address of the BU packet, the address of the CN (30) or the address of the home agent (32) of the nested MNN (46) in a RH0 of the BU packet, and a care of address of the root_MR (40) in a RH5 of the BU packet.

12. The method according to one of claims 3 to 11,
**characterised in that**
the step of BUCMT (57) comprises the step of binding acknowledgement (BA) (66).

13. The method according to claim 12,
**characterised in that**
the step of BA (66) comprises the step of providing, by the CN (30), the address of CN (30) in a source address of the a BA packet, the care of address of the root_MR (40) in a destination address of the BA packet, and a home address of the nested MNN (46) in a RH2 of the BA packet.

14. The method according to claim 12,
**characterised in that**
the step of BA (66) comprises the step of providing, by the home agent (32) of the nested MNN (46), the address of the home agent (32) of the nested MNN (46) in a source address of the a BA packet, the care of address of the root_MR (40) in a destination address of the BA packet, and a home address of the nested MNN (46) in a RH2 of the BA packet.

15. The method according to one of claims 3 to 14,
**characterised in that**
the step of IODT (58) comprises the step of incoming data transmission (IDT) (68),
the step of IDT (68) comprises the further step of providing, by the CN (30), a care of address of the root_MR (40) in a destination address of an incoming data packet and a home address of the nested MNN (46) in a RH2 of the incoming data packet.

16. The method according to one of claims 4 to 15,
**characterised in that**
the step of IODT (58) comprises the step of outgoing data transmission (ODT) (69),
the step of ODT (69) comprises the further step of providing, by the nested MNN (46), a home address of the nested MNN (46) in a source address of an outgoing data packet, a care of address of the root_MR (40) in a destination address of the outgoing data packet, the address of the CN (30) in a RH0 of the outgoing data packet, and a care of address of the root_MR (40) in a RH5 of the outgoing data packet.

17. A method for operating a root mobile router (root_MR) (40) comprising the steps of:
swapping, by the root_MR (40), a content of a destination address of a header of an incoming packet for a content of an incoming field of the header of the incoming packet, the incoming packet being destined for transmission from a correspondence node (CN) (30) to the nested mobile nested node (MNN) (46); and
swapping, by the root_MR (40), a content of a source address of a header of an outgoing packet for a content of a second outgoing field of the header of the outgoing packet, and a content of a destination address of the header of the outgoing packet for a content of a first outgoing field of the header of the outgoing packet, the outgoing packet being destined for transmission from the nested MNN (46) to the CN (30).

18. A root mobile router (root_MR) (40) comprises
an input means for receiving an incoming or outgoing packet;
a forwarding means for transmit the incoming or the outgoing packet;
an incoming swapping means, the incoming swapping means being connected to the input means and the forwarding means;
an outgoing swapping means, the outgoing swapping means being connected to the input means and the forwarding means;
wherein the incoming swapping means is for swapping a content of a destination address of a header of the incoming packet for a content of a type 2 Routing Header (RH2) of the header of the incoming packet, the incoming packet being destined for transmission from a correspondence node (CN) (30) to a nested mobile network node (MNN) (46); and
the outgoing swapping means is for swapping a content of a source address of a header of the outgoing packet for a content of a type 5 Routing Header (RH5) of the outgoing packet, and a content of a destination address of the header of the outgoing packet for a content of a type 0 Routing Header (RH0) of the outgoing packet, the outgoing packet being destined for transmission from the nested MNN (46) to the CN (30).
